# EUROPÄISCHE PATENTANMELDUNG

(11) **EP 1 206 089 A2**
(43) Veröffentlichungstag der Anmeldung: **15.05.2002**
(21) Anmeldenummer: 00112981.6
(22) Anmeldetag: 21.06.2000
(51) Int. Cl.: H04L 12/64, H04Q 11/04

(54) **Verfahren, Adaptionseinrichtung, Netzwerkknoten und Vermittlungsstelle zur Anbindung eines Telekommunikations-Terminals an das Internet**

(71) Anmelder: ALCATEL, 75008 Paris (FR)
(72) Erfinder: Uebele, Roland, 73614 Schorndorf (DE); Kulzer, Helmut, 71254 Ditzingen (DE)
(74) Vertreter: Brose, Gerhard, Dipl.-Ing.

(57) **Zusammenfassung**

Die vorliegende Erfindung betrifft ein Verfahren, eine Adaptionseinrichtung, einen Netzwerkknoten und eine Vermittlungsstelle zur Anbindung eines Telekommunikations-Terminals (T1) an das Internet über ein ISDN (Integrated Services Digital Network) -Telekommunikationsnetz (ISDNW). Das Terminal (T1) kann über eine Schnittstelleneinrichtung Daten in einem ersten Protokoll eines Paketdatennetzwerkes empfangen und senden und ist an eine Vermittlungsstelle (SW1) des ISDN-Telekommunikationsnetzes angeschlossen. Die Daten des Terminals werden mit Daten kombiniert, die von weiteren Terminals (T2) gesendet oder empfangen werden. Es wird vorgeschlagen dass diese Daten über eine Datenverbindung (TDSW) des ISDN-Telekommunikationsnetzes zwischen der Vermittlungsstelle (SW1) und einer Adaptionseinrichtung (AD) übertragen werden und umgekehrt. Diese Daten werden in ein von einer Internet-Zugangseinrichtung (ACC1, ACC2) interpretierbares zweites Protokoll von der Adaptionseinrichtung (AD) konvertiert und umgekehrt. Die Daten werden dann in dem zweiten Protokoll zwischen der Internet-Zugangseinrichtung (ACC1, ACC2) und der Adaptionseinrichtung (AD) übertragen.

## Beschreibung

Die vorliegende Erfindung betrifft ein Verfahren gemäß dem Oberbegriff des Anspruchs 1, eine Adaptionseinrichtung gemäß dem Oberbegriff des Anspruchs 9 hierfür, einen Netzwerkknoten gemäß dem Oberbegriff des Anspruchs 13 hierfür und eine Vermittlungsstelle gemäß dem Oberbegriff des Anspruchs 14 hierfür.

Wenn ein typischer End-Teilnehmer mit seinem Endgerät, üblicherweise mit einem Personal Computer, eine Online-Verbindung zu einem Datennetzwerk, insbesondere zum Internet aufbaut, benutzt er dazu zumeist ein Modem oder einen Adapter, mit dem er seinen Personal Computer an eine Teilnehmeranschlussleitung eines öffentlichen Telefonnetzwerkes anschliesst, das in einer modernen und der vorliegenden Erfindung zugrundeliegenenden Variante ein Integrated Services Digital Network (ISDN) ist. Dann wählt der Teilnehmer an dem Personal Computer die Teilnehmernummer eines Einwahlservers eines Internet Service Providers (ISP), worauf das öffentliche Telefonnetzwerk eine Online-Verbindung zwischen dem Personal Computer und dem Einwahlserver und damit zum Internet aufbaut. Die Online-Verbindung wird durch das Telekommunikationsnetz auf einer geschalteten Verbindung und auf der ISDN-Teilnehmeranschlussleitung über einen sogenannten B-Kanal aufgebaut, der exklusiv eine konstante, für Sprachübertragung geeignete Bandbreite zur Verfügung stellt. Der Teilnehmer kann nach dem vorstehenden Verfahren nur dann Daten aus dem Internet empfangen und in das Internet senden, wenn der Teilnehmer zuvor eine solche geschaltete Online-Verbindung aufbaut. Viele Internet-Anwendungen auf dem Personal Computer sollten jedoch eine kontinuierliche Verbindung zum Internet unterhalten, ohne umständlichen Verbindungsauf- und abbau und erfordern dabei über weite Zeitabschnitte eine weitaus geringere Bandbreite als eine Sprachübertragung. Internet-Anwendungen mit idealerweise permanenter, aber niederbitratiger Internet-Verbindung sind beispielsweise das Senden und Empfangen von E-Mails oder das Aktualisieren von an sich auf dem Endgerät des Teilnehmers schon gespeicherten Daten, wie z.B. Preislisten, Fahrpläne, Ankunftszeiten von Flugzeugen.

In einer bereits vorgeschlagenen Lösung dieses Problems werden deshalb permanente Internet-Verbindungen über D-Kanäle von ISDN-Teilnehmeranschlussleitungen realisiert. Dabei werden auf einem D-Kanal empfangene ISDN-Nachrichten auf Nachrichten für ein X.25-Netzwerk umgesetzt. Die X.25-Nachrichten werden dann über ein X.25-Netzwerk zu einem Internet Service Provider (ISP) weitertransportiert. In umgekehrter Richtung erfolgt das Verfahren analog. Zwar ist damit eine semi-permanente Online-Verbindung hergestellt, es ist jedoch erforderlich, ein X.25-Netzwerk in die Verbindung miteinzubeziehen. Das X.25-Netzwerk wird durch die zusätzliche Last der semi-permanenten Online-Verbindung belastet und muss ausserdem ein kompliziertes Routing von X.25-Nachrichten erbringen. Zudem erweist sich eine Tarifierung eines solchen Dienstes über ein X.25-Netzwerk in der Praxis als schwierig. Weiterhin verfügen nicht alle Anbieter eines ISDN-Telekommunikationsnetzes über ein X.25-Netzwerk oder einen Anschluss zu einem solchen.

Eine solche Nutzung eines X.25-Netzwerks wird auch bei einer von der in den USA gegründeten Vereinigung VIA (Vendors ISDN Association) vorgesehen, bei der einerseits eine als "Always On (AO)" bezeichnete dauerhafte Verbindung zwischen einem ISDN-Endgerät und dem Internet über einen D-Kanal unter der oben beschriebenen Einbeziehung eines X.25-Netzwerks aufgebaut wird und andrerseits dynamisch bei Bedarf einer oder mehrere B-Kanäle in einer als "Dynamic ISDN" (Dl) Funktion zugeschaltet werden. Das Gesamtkonzept wird daher AODI (Always On Dynamic ISDN) genannt. Auch bei AODI nach VIA ist ein X.25-Netzwerk erforderlich mit den bereits beschriebenen Nachteilen. Weiter weist auch der AODI-Systemansatz gemäß VIA erhebliche Nachteile auf. Ein sogenannter Network Access Server (NAS) terminiert gemäß VIA nämlich sowohl das X.25-Netzwerk zur Anbindung des "Always On"-D-Kanals als auch den oder die B-Kanäle, die über das ISDN-Telekommunikationsnetz zu dem NAS führen. Über die Anschlussmöglichkeit der unterschiedlichen Netzwerke X.25 und ISDN hinaus muss der NAS für das dynamische Zu- und Abschalten von B-Kanälen ausgerüstet sein. Bisher im Einsatz befindliche NAS sind nicht für AODI gemäß VIA geeignet und müssen aufwendig umgerüstet werden oder gar durch neue, für AODI gemäß VIA geeignete NAS ersetzt werden.

Es ist daher Aufgabe der Erfindung, für Teilnehmeranschlüsse eines ISDN-Telekommunikationsnetzes einen optimierten, auch dauerhaft unterhaltbaren Zugang zum Internet zu schaffen.

Diese Aufgabe wird durch Verfahren gemäß der technischen Lehre des Anspruchs 1, eine Adaptionseinrichtung gemäß der technischen Lehre des Anspruchs 9, einen Netzwerkknoten gemäß der technischen Lehre des Anspruchs 13 sowie eine Vermittlungsstelle gemäß der technischen Lehre des Anspruchs 14 gelöst. Weitere vorteilhafte Wirkungen der Erfindung ergeben sich aus den abhängigen Ansprüchen und der Beschreibung.

Der Erfindung liegt dabei der Gedanke zugrunde, Telekommunikations-Terminals, insbesondere Personal Computer oder Internet-fähige Telefone, über ein ISDN (Integrated Services Digital Network) -Telekommunikationsnetz einen semi-permanenten Zugang zum Internet jeweils über einen einzelnen Kanal, insbesondere einen D-Kanal, der jeweils benutzten Teilnehmeranschlussleitungen zu verschaffen. Auf einem D-Kanal senden und empfangen die Terminals Daten dabei üblicherweise auf dem OSI-Layer 3 im X.25-Format gemäß den Empfehlungen der ITU (International Telecommunications Union). Vermittlungsstellen des ISDN-Telekommunikationsnetzes bündeln dann durch Multiplexer/Demultiplexer, auch Frame Handler genannt, jeweils die Daten mehrerer D-Kanäle und übertragen die gebündelten Daten jeweils auf Sammelkanälen des ISDN-Telekommunikationsnetzes, vorzugsweise auf Bd-Kanälen, welche die Kapazität eines B-Kanals aufweisen, zu einer Adaptionseinrichtung. Die Adaptionseinrichtung konvertiert dann die Daten in ein Format, das von einer Internet-Zugangseinrichtung, beispielsweise einem Access-Server oder einem Network Access Server (NAS), interpretierbar ist und überträgt die Daten zu der Internet-Zugangseinrichtung. Der umgekehrte Weg zwischen Internet-Zugangseinrichtung, Adaptionseinrichtung und den Vermittlungsstellen funktioniert analog. Ein X.25-Datennetzwerk ist somit nicht erforderlich. Die Sammelkanäle können zwischen den Vermittlungsstellen und der Adaptionseinrichtung dauerhaft eingerichtet werden oder aber bei Bedarf aufgebaut werden. Weiterhin kann zur Übertragung auf den Sammelkanälen sogar auf das X.25-Protokoll verzichtet werden; die Daten können dann beispielsweise direkt in einem Point-to-Point-Protokoll (definiert durch die Internet Engineering Task Force = IETF) auf einem ISDN-Schicht-2 Protokoll übermittelt werden, so dass der Nutzdatendurchsatz wesentlich verbessert wird.

In einer Weiterbildung der Erfindung können bedarfsweise weitere Datenverbindungen zwischen jeweils einem Terminal und der Adaptionseinrichtung und damit zum Internet eingesetzt werden. Wenn nämlich die Kapazität eines D-Kanals überschritten ist, können entweder von einem Terminal oder von der Adaptionseinrichtung veranlasst, einer oder mehrere zusätzliche Kanäle zwischen dem jeweiligen Terminal und der Adaptionseinrichtung aufgebaut werden. Dabei werden beispielsweise einer oder zwei B-Kanäle zu einem D-Kanal hinzugeschaltet oder es wird von dem D-Kanal auf einen B-Kanal umgeschaltet und die Übertragung auf dem D-Kanal unterbrochen. Sobald die Übertragungskapazität des D-Kanals wieder ausreicht, wird wieder lediglich der D-Kanal eingesetzt. Damit werden die B-Kanal Ressourcen des ISDN-Telekommunikationsnetzes nur dann beansprucht, wenn die geforderte Übertragungskapazität dazu zwingt. Wenn die Adaptionseinrichtung dabei den Datenverkehr sowohl über den D-Kanal als auch über dynamische zu-und abgeschaltete B-Kanäle abwickelt, können bereits im Einsatz befindliche Internet-Zugangseinrichtungen, insbesondere Network Access Server (NAS), ohne aufwendige Um- oder Aufrüstung weiterbetrieben werden. Die Adaptionseinrichtung kann sogar direkt an einen Breitband-Zugangsrechner angeschlossen werden, der beispielsweise für den Zugang von ADSL-Teilnehmern (Asynchronous Digital Subscriber Line) zum Internet vorgesehen ist.

Zur weiteren Schonung der Ressourcen des ISDN-Telekommunikationsnetzes können gebündelte D-Kanäle wenigstens abschnittsweise auf Verbindungen eines Übertragungsnetzes, beispielsweise eines Frame-Relay-Netzes geführt werden.

Daten.

In einer vorteilhaften Variante der Erfindung ermittelt eine Vermittlungsstelle des ISDN-Telekommunikationsnetzes, vorzugsweise diejenige, an die ein erfindungsgemäß an das Internet angekoppeltes Terminal angeschlossen ist, auch die für die Verbindung des Terminals mit dem Internet anfallenden Gebühren. Dazu ermittelt die Vermittlungsstelle einerseits die auf dem D-Kanal zwischen Terminal und Internet übertragene Datenmenge und andererseits die Nutzungsdauer des B-Kanals oder der B-Kanäle zwischen Terminal und Internet.

Im folgenden werden die Erfindung und ihre Vorteile anhand eines Ausführungsbeispiels unter Zuhilfenahme der Zeichnungen dargestellt. Die
- Figur: zeigt eine Anordnung zur Ausführung des erfindungsgemäßen Verfahrens mit Terminals T1, T2, T3 und T4, mit einer erfindungsgemäßen Vermittlungsstelle SW1, einer erfindungsgemäßen Adaptionseinrichtung AD sowie Internet-Zugangseinrichtungen ACC1 und ACC2.

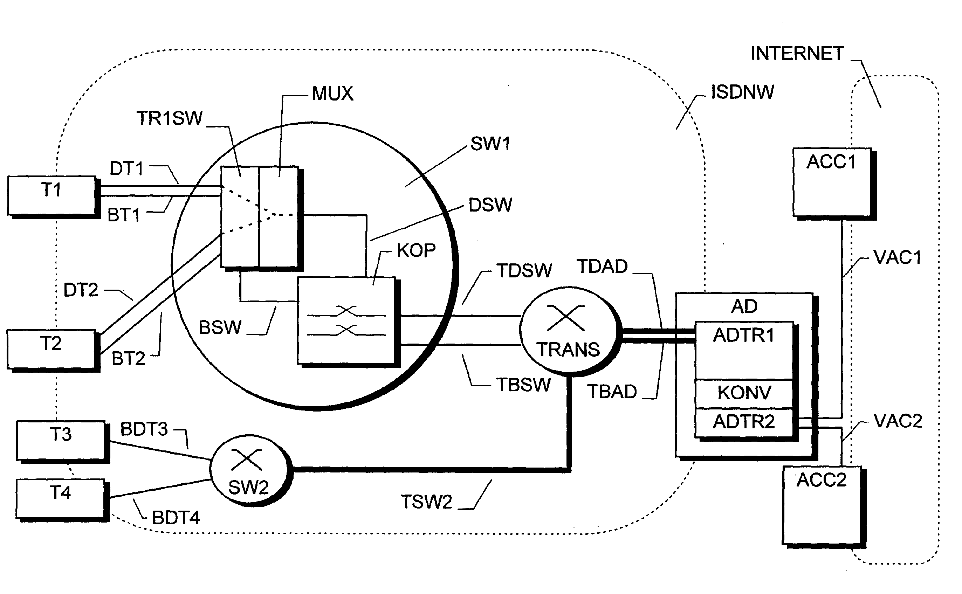

In der Figur ist eine beispielhafte Anordnung dargestellt, mit der die Erfindung ausgeführt werden kann. Die Figur zeigt ein ISDN-Telekommunikationsnetz ISDNW mit einer Vermittlungsstelle SW1, einer Vermittlungsstelle SW2 und einer Vermittlungsstelle TRANS. Diese Vermittlungsstellen stehen beispielhaft für weitere, in der Figur nicht dargestellte Einrichtungen des ISDN-Telekommunikationsnetzes ISDNW, z.B. weitere Vermittlungsstellen, ein Network Management System und Übertragungseinrichtungen. Bei den Vermittlungsstellen SW1 und SW2 handelt es ich in dem Beispiel in der Figur um Ortsvermittlungsstellen, bei der Vermittlungsstelle TRANS um eine Transit-Vermittlungsstelle, die mit einer Adaptionseinrichtung AD verbunden ist. Mittels der Adaptionseinrichtung AD können über das ISDN-Telekommunikationsnetz ISDNW eine Zugangseinrichtung ACC1 oder eine Zugangseinrichtung ACC2 erreicht werden, über die Daten in das Internet aus dem ISDN-Telekommunikationsnetz ISDNW gesendet und von diesem aus dem Internet empfangen werden können. Die Adaptionseinrichtung AD wandelt aus dem ISDN-Telekommunikationsnetz ISDNW empfangene Daten zum Weiterversand an die Zugangseinrichtungen ACC1 oder ACC2 und umgekehrt. Bei der Adaptionseinrichtung AD handelt es sich beispielsweise um einen Server, der neben den in der Figur gezeigten und unten näher erläuterten Elementen weitere Baugruppen aufweist, beispielsweise einen oder mehrere Prozessoren, Speichermittel sowie Ein- und Ausgabemedien. Bei den Zugangseinrichtungen ACC1 und ACC2 handelt es sich um Einwahl-Server von Internet-Service-Providern (ISP), die Endteilnehmern des ISDN-Telekommunikationsnetzes ISDNW einen Zugang zum Internet ermöglichen.

An die Vermittlungsstelle SW1 sind ein Terminal T1 und ein Terminal T2 über ISDN-Teilnehmeranschlussleitungen angeschlossen. Von diesen Teilnehmeranschlussleitungen sind beispielhaft für das Terminal T1 ein Kanal DT1 und ein Kanal BT1 gezeigt, für das Terminal T2 ein Kanal DT2 und ein Kanal BT2. Die Kanäle DT1 und DT2 sind D-Kanäle, die Kanäle BT1 und BT2 stehen für einen oder mehrere B-Kanäle eines Basisanschlusses oder eines Primär-Multiplexanschlusses. An die Vermittlungsstelle SW2 sind ein Terminal T3 über eine ISDN-Teilnehmeranschlussleitung BDT3 und ein Terminal T4 über eine ISDN-Teilnehmeranschlussleitung BDT4 angeschlossen. Bei den Terminals T1, T2, T3 und T4 handelt es sich um Endgeräte, mit denen ein Zugang zum Internet möglich ist. Die Terminals T1, T2, T3 und T4 sind also beispielsweise Personal Computer mit einer Schnittstellenkarte, insbesondere einem ISDN-Adapter, zum Empfangen und Senden von Datenpaketen von und zum Internet über das ISDN-Telekommunikationsnetz ISDNW. Es kann sich bei den Terminals T1, T2, T3 und T4 jedoch auch um ISDN-Telefone handeln, die über zusätzliche Einrichtungen zum Zugang zum Internet verfügen, z.B. über ein Display, erweiterte Eingabemittel und einen leistungsfähigen Prozessor, und somit eine Software einer Graphischen Bedienoberfläche und eine Software eines Internet-Browsers ausführen können. Die Terminals T1, T2, T3 und T4 können auch für Telekommunikationsanlagen stehen, an die mehrere Internet-fähige Endgeräte angeschlossen sind. Eine solche Telekommunikationsanlage stellt dann die Verbindung für eines oder mehrere Endgeräte zu dem ISDN-Telekommunikationsnetz ISDNW sowie zum Internet her.

Das Terminal T1 sendet an das Internet adressierte Datenpakete über den Kanal DT1 an die Vermittlungsstelle SW1. Die Vermittlungsstelle SW1 fügt daraufhin die Datenpakete in eine bestehende Verbindung zu der Adaptionseinrichtung AD ein oder baut eine D-Kanal Verbindung zwischen dem Terminal T1 und der Adaptionseinrichtung AD auf, die auf dem Verbindungsabschnitt zwischen der Vermittlungsstelle SW1 und der Adaptionseinrichtung AD auch als virtuelle D-Kanal Verbindung bezeichnet werden kann. Auf dem Kanal DT1 kommunizieren die Vermittlungsstelle SW1 und das Terminal T1 auf der OSI-Schicht 2 mit Hilfe des sogenannten HDLC-Protokolles. Das HDLC-Protokoll stellt sogenannte Transport-Rahmen im ISDN D-Kanal zur Verfügung, in denen im vorliegenden Fall Datenpakete auf der OSI-Schicht 3 im X.25-Protokoll transportiert werden. Die X.25-Datenpakete enthalten Daten im Internet Protokoll (IP). Die Vermittlungsstelle SW1 empfängt die HDLC-Datenpakete von dem Terminal T1 durch eine Verbindungsbaugruppe TR1SW. Die Verbindungsbaugruppe TR1SW leitet die HDLC-Rahmen an eine Kombinationsbaugruppe MUX weiter. Die Kombinationsbaugruppe MUX kann auch als "Frame-Handler" bezeichnet werden, da sie die HDLC-Rahmen "be-handelt", d.h. in einer Multiplexfunktion HDLC-Rahmen von verschiedenen Quellen zu einem Datenstrom zusammenfügt und in umgekehrter Richtung in einer Demultiplex-Funktion aus einem Datenstrom Datenpakete zur Bildung von HDLC-Rahmen für verschiedene Ziele extrahiert.

Die Kombinationsbaugruppe MUX ermittelt anhand einer in der Vermittlungsstelle SW1 gespeicherten Adresse-zu-Ziel-Tabelle und anhand einer in den jeweiligen HDLC-Rahmen enthaltenen Adresse, bestehend aus einem Dienstkennzeichner (engl.: Service Access Point Identfier / SAPI) und einem Endgerätekennzeichner (engl.: Terminal End point Identifier / TEI), dass die HDLC-Rahmen mit den X.25-Datenpaketen an das Internet gerichtet sind. Deshalb sendet die Kombinationsbaugruppe MUX die X.25-Datenpakete über eine Verbindung DSW, die ein sogenannter Bd-Kanal sein kann, an eine Verbindungsbaugruppe KOP, welche die X.25-Datenpakete dann auf einer Verbindung TDSW an die Vermittlungsstelle TRANS weitersendet. Die Vermittlungsstelle TRANS sendet die X.25-Datenpakete dann auf einer Verbindung TDAD zu einer die X.25-Verbindung terminierenden Verbindungsbaugruppe ADTR1 der Adaptionseinrichtung AD. Das Terminieren der X.25-Verbindung wird auch als Packet Handling bezeichnet, die Verbindungsbaugruppe ADTR1 erbringt daher eine Packet Handler (PH) Funktion. Die Adaptionseinrichtung AD leitet dann die X.25-Datenpakete an eine Konvertierungsbaugruppe KONV weiter, welche den X.25-Datenpaketen die darin enthaltenen Internet-Datenpakete (= Datenpakete im Internet-Protokoll) entnimmt und an eine Verbindungsbaugruppe ADTR2 weitersendet. Die Verbindungsbaugruppe ADTR2 leitet dann die Internet-Datenpakete zu der Internet-Zugangseinrichtung ACC1 auf der Verbindung VAC1 weiter. Auf der Verbindung VAC1 kommunizieren die Adaptionseinrichtung AD und die Zugangseinrichtung beispielsweise über ein X.21-Protokoll, über Ethernet oder über ATM (Asychronous Transfer Mode).

In umgekehrter Richtung können Internet-Datenpakete von der Zugangseinrichtung ACC1 auf der oben beschriebenen semi-permanenten Verbindung zwischen dem Terminal T1 und der Zugangseinrichtung ACC1 in analoger Weise an das Terminal T1 gesendet werden. Ein für das Terminal T1 bestimmtes Datenpaket, erkennbar an einer in dem Datenpaket enthaltenen Ziel-Adresse (beispielsweise einer IP-Adresse), sendet die Zugangseinrichtung ACC1 zunächst über die Verbindung VAC1 an die Adaptionseinrichtung AD, welche das Datenpaket in mit der Verbindungsbaugruppe ADTR2 empfängt, in ihrer Konvertierungsbaugruppe KONV in ein X.25-Datenpaket konvertiert und über die Verbindungsbaugruppe ADTR1 auf der Verbindung TDAD an die Vermittlungsstelle TRANS weiterversendet. Die Vermittlungsstelle TRANS sendet das X.25-Datenpaket auf der Verbindung TDSW an die Vermittlungsstelle SW1. Die Vermittlungsstelle SW1 empfängt das Datenpaket mit der Verbindungsbaugruppe KOP und leitet es auf der Verbindung DSW an die Kombinationsbaugruppe MUX. Die Kombinationsbaugruppe MUX trennt das Datenpaket gegebenenfalls von anderen, ebenfalls auf der Verbindung TDSW empfangenen, aber nicht für das Terminal T1 bestimmten Datenpaketen gibt das Datenpaket an die Verbindungsbaugruppe TR1SW weiter, welche das Datenpaket in einem HDLC-Rahmen an das Terminal T1 versendet.

Auf der Verbindung T1-D-ACC1 zwischen dem Terminal T1 und der Zugangseinrichtung ACC1 können auf diese Weise beispielsweise E-Mails übertragen oder auf dem Terminal T1 angezeigte Börsenkurse mit aus dem Internet geladenen Daten aktualisiert werden.

Die semi-permanente Verbindung zwischen dem Terminal T1 und der Zugangseinrichtung ACC1 wird bis auf die Verbindung VAC1 vollständig auf dem ISDN-Telekommunikationsnetz ISDNW aufgebaut, ein externes X.25-Datennetzwerk ist nicht erforderlich. Ausserdem können einige Adressfelder in den X.25-Datenpaketen unausgefüllt bleiben, da deren Adressinformation nur für ein kompliziertes und zeitraubendes Routing in einem externen X.25-Datennetzwerk notwendig ist. Durch den Verzicht auf ein X.25-Datennetzwerk ist es auch möglich, dass das Terminal T1 und die Vermittlungsstelle SW1 die Internet-Datenpakete auch ohne Zuhilfenahme des X.25-Protokolls, lediglich mit Hilfe von HDLC-Rahmen wechselseitig übermitteln. Die Vermittlungsstelle SW1 kann dann diese Internet-Datenpakete auf der Verbindung TDSW und der TDAD entweder auf unveränderten HDLC-Rahmen weiterleiten, mit neuen Adressen versehen oder auch auf einem alternativen Schicht-2-Protokoll übermitteln. Es ist auch möglich, dass zwar auf dem Kanal DT1 das X.25-Protokoll eingesetzt wird, die Vermittlungsstelle SW1 und die Adaptionseinrichtung AD jedoch zum gegenseitigen Datenaustausch auf das X.25-Protokoll verzichten und damit den Datendurchsatz auf dem ISDN-Telekommunikationsnetz ISDNW steigern.

Die Verbindung T1-D-ACC1 kann auch als eine sogenannte virtuelle oder logische Verbindung bezeichnet werden, da sie eine Paketdatenverbindung ist, die logisch zwischen dem Terminal T1 und der Adaptionseinrichtung AD besteht und auf der nur nach Bedarf Datenpakete gesendet werden. Es können die auf der Verbindung T1-D-ACC1 zu übertragenden Datenpakete auch auf bereits geschalteten, für weitere Verbindungen nutzbaren Verbindungswegen zwischen der Adaptionseinrichtung AD und der Vermittlungsstelle SW1 übermittelt werden. Die Verbindung T1-D-ACC1 kann einerseits beispielsweise von einer in der Figur nicht dargestellten Netzwerksteuerung als sogenannter "Preallocated Logical Link" eingerichtet werden, andererseits aber auch von dem Terminal T1 oder der Adaptionseinrichtung AD bei dem ISDN-Telekommunikationsnetz ISDNW angefordert werden. Zur Einrichtung der virtuellen Verbindung T1-D-ACC1 werden dann Adress-zu-Pfad-Zuordnungstabellen sowohl in der Vermittlungsstelle SW1 als auch in der Adaptionseinrichtung AD abgelegt, so dass diese jeweils anhand einer in dem jeweiligen Datenpaket enthaltenen Adresse ermitteln können, auf welchem Datenpfad das Datenpaket weiterzuversenden ist. Eine solche Datenpaket-Adresse ist auf seiten der Vermittlungsstelle SW1 beispielsweise eine in den HDLC-Frames enthaltene Kombination aus TEI/SAPI, auf seiten der Adaptionseinrichtung AD eine Internetadresse, die zwar dynamisch vergeben sein kann, jedoch zumindest solange gültig ist, wie die D-Kanal-Verbindung T1-D-ACC1 unterhalten wird.

Zwar wird der Kanal DT1 durch Datenübertragung auf der Verbindung T1-D-ACC1 beansprucht. Es ist aber trotzdem möglich, beispielsweise einen für das Terminal T1 ankommenden Ruf auf dem Kanal DT1 zu signalisieren. Die für die Ruf-Signalisierung benötigten HDLC-Rahmen und die auf der Verbindung T1-D-ACC1 übermittelten HDLC-Rahmen müssen dazu lediglich von dem Terminal T1 sowie von der Vermittlungsstelle SW1 mit unterschiedlichen Dienstkennzeichnern (engl.: Service Access Point Identfier / SAPI) versehen werden. Das Terminal T1 kann auch für eine Gruppe von Endgeräten stehen, die gemeinsam an eine ISDN-Teilnehmeranschlussleitung angeschlossen sind. Die HDLC-Rahmen können den unterschiedlichen Endgeräten mit Hilfe eines in den jeweiligen Rahmen enthaltenen Endgerätekennzeichners (engl.: Terminal End point Identifier / TEI) zugeordnet werden.

In analoger Weise wie das Terminal T1 kann auch das Terminal T2 über die Vermittlungsstelle SW1 und das ISDN-Telekommunikationsnetz ISDNW mit der Zugangseinrichtung ACC1 verbunden werden. Dazu wird eine VerbindungT2-D-ACC1 zu der Verbindung T1-D-ACC2 parallele Verbindung auf den bekannten Verbindungswegen DSW, TDSW, TDAD und VAC1 aufgebaut, die jedoch anstatt über den Kanal DT1 über den Kanal DT2 zu dem Terminal T2 führt. Die Kombinationsbaugruppe MUX kombiniert in einer Multiplex-Funktion dabei die von dem Terminal T2 gesendeten Datenpakete zu den von dem Terminal T1 gesendeten Datenpaketen und bildet einen Kombinations-Datenstrom, der Datenpakete des Terminals T1 sowie des Terminals T2 enthält und an die Adaptionseinrichtung AD gesendet wird. In umgekehrter Richtung ermittelt die Kombinationsbaugruppe MUX, welche der von der Adaptionseinrichtung AD gesendeten Datenpakete jeweils an das Terminal T1 oder an das Terminal T2 weiterzusenden sind und leitet diese Datenpakete an das Terminal T1 oder an das Terminal T2 entsprechend weiter. Sind neben dem Terminal T1 oder dem Terminal T2 auch weitere Terminals gemäß der Erfindung an die Vermittlungsstelle SW1 angeschlossen, kann die Kombinationsbaugruppe MUX auch deren Daten in den Datenstrom auf der Verbindung DSW einreihen.

Die Verbindungen T1-D-ACC1 und T2-D-ACC1 können einerseits auf einem für D-Kanal-Datenverbindungen ohnehin bereit bestehenden Verbindungsweg aufgebaut werden und dabei beispielsweise eine sogenannte Link Access Procedure auf einem D-Kanal (LAP-D) eingesetzt werden, andererseits kann zur gebündelten Übertragung von Datenpaketen der Verbindungen T1-D-ACC1 und T2-D-ACC1 auch eigens ein Verbindungskanal, insbesondere ein sogenannter Bd-Kanal zwischen der Vermittlungsstelle SW1 und der Adaptionseinrichtung AD geschaltet werden. Die Vermittlungsstelle SW1 baut einen solchen Bd-Kanal auf der Verbindung TDSW und der Verbindung TDAD zu der Adaptionseinrichtung AD auf, auf dem dann die virtuellen Verbindungen T1-D-ACC1 und T2-D-ACC1 unterhalten werden können. Auf diesem Bd-Kanal können auch weitere Paketdaten-Verbindungen unterhalten werden, beispielsweise zu in der Figur nicht dargestellten, an die Vermittlungsstelle SW1 angeschlossenen Terminals und dem Internet. Sollte weitere Paketdaten-Übertragungskapazität zwischen der Vermittlungsstelle SW1 und der Adaptionseinrichtung AD erforderlich sein, kann die Vermittlungsstelle SW1 auch weitere Bd-Kanäle schalten. Auf einem solchen Bd-Kanal wird dann üblicherweise auf Schicht 2 ebenfalls das LAP-D-Protokoll eingesetzt.

Zwar reicht die Übertragungskapazität eines D-Kanals für eine semi-permanente Verbindung zwischen einem Terminal und dem Internet aus, häufig jedoch wird zumindest kurzzeitig eine höhere Übertragungskapazität gewünscht. Dann kann beispielsweise entweder von dem Terminal T1 oder von der Adaptionseinrichtung AD eine zusätzliche B-Kanal-Verbindung von dem ISDN-Telekommunikationsnetz ISDNW angefordert werden. Vorteilhafterweise werden dazu die Internet-Datenpakete mit Hilfe des Multi-Link Protokolls (MLP) zwischen der Adaptionseinrichtung AD und dem Terminal T1 übermittelt. Das MLP erlaubt die parallele Übertragung von Datenpaketen zwischen Endpunkten über getrennte Verbindungskanäle ("Links") und sorgt dafür, dass die unterschiedlichen Verbindungskanäle als ein gemeinsamer Datenkanal behandelt werden. Das Bandwidth Allocation Protokoll (BAP) und das zugehörige Bandwidth Allocation Control Protocol (BACP) ermöglichen dann zusätzlich eine dynamische Anforderung von Übertragungskapazität, speziell das dynamische Zu- und Abschalten von Verbindungswegen. Das MLP und das BAP sind durch die IETF im Rahmen der Point-to-Point-Protokolle spezifiziert. Das Terminal T1 unterhält dabei mit der Adaptionseinrichtung AD einen sogenannten "Primary Link" im Rahmen des MLP auf dem paketorientierten Verbindungsweg DT1, DSW, TDSW und TDAD. Wenn nun ein weiterer Übertragungsbedarf besteht, beispielsweise weil eine umfangreiche Email versendet werden soll, fordert das Terminal T1 bei der Vermittlungsstelle SW1 das Schalten einer B-Kanal-Verbindung zu der Adaptionseinrichtung AD an. Die Vermittlungsstelle SW1 baut daraufhin eine Verbindung von der Verbindungsbaugruppe TR1SW, die den Kanal BT1 bedient, über eine interne Verbindung BSW zu der Verbindungsbaugruppe KOP auf. Diese baut dann die weitere B-Kanal-Verbindung T1-B-ACC1 über die Verbindung TBSW, die Vermittlungsstelle TRANS und die Verbindung TBAD zu der Adaptionseinrichtung AD auf. Auf der B-Kanal-Verbindung T1-B-ACC1 zwischen dem Terminal T1 und der Adaptionseinrichtung AD kann auf Schicht 2 beispielsweise mit Hilfe des sogenannten LAP-B Protokolles (LAP-B = Link Access Procedure Balanced) kommuniziert werden, auf dessen Rahmen dann Internet-Datenpakete direkt im Point-to-Point-Protokoll transportiert werden. Anstatt des Point-to-Point-Protokolles kann auch ein anderes, IP-Datenpakete transportierendes Protokoll eingesetzt werden, das dynamisches Zu- und Abschalten von B-Kanälen zu steuern ermöglicht.

Nach Zuschaltung der B-Kanal-Verbindung T1-B-ACC1 kann diese zusammen mit der Verbindung T1-D-ACC1 auch parallel genutzt werden, da nicht nur für die B-Kanal-Verbindung T1-B-ACC1 eine garantierte Bandbreite (64kBit/s) zur Verfügung steht, sondern üblicherweise auch auf der D-Kanal-Verbindung T1-D-ACC1. Wenn statt der D-Kanal-Verbindung T1-D-ACC1 beispielsweise ein X.25-Netzwerk zwischen Vermittlungsstelle SW1 und der Adaptionseinrichtung AD eingesetzt werden würde, wäre eine parallele Übertragung nur schwer realisierbar, da abhängig von der momentanen Belastung des X.25-Netzwerkes Datenüberholungen auf den unterschiedlichen Datenpfaden zu bewältigen sind. Wenn der Übertragungsbedarf des Terminals T1 besonders gross ist, können noch weitere B-Kanäle zugeschaltet werden. Ebenso kann der Aufbau einer oder mehrerer B-Kanal-Verbindungen auch von der Adaptionseinrichtung AD veranlasst werden, z.B. wenn von dem Terminal T1 grössere Datenmengen aus dem Internet heruntergeladen werden. Durch die dynamische Zuschaltung und Abschaltung von B-Kanal-Verbindungen wird das ISDN-Telekommunikationsnetz ISDNW nur dann mit geschalteten Verbindungen belastet, wenn deren Bandbreite wirklich benötigt wird. Das Terminal T1 ist zwar permanent mit dem Internet verbunden, blockiert jedoch nicht teure und wertvolle, für Gesprächsverbindungen benötigte B-Kanal-Übertragungskapazität des ISDN-Telekommunikationsnetzes ISDNW.

Neben der Zugangseinrichtung ACC1 kann auch die Zugangseinrichtung ACC2 von der Adaptionseinrichtung AD und damit von den Terminals T1, T2, T3 und T4 aus erreicht werden. Es kann z.B. vorbestimmt sein, dass die Adaptionseinrichtung AD eine semi-permanente Verbindung von dem Terminal T1 zu der Zugangseinrichtung ACC1 weiterführt, während die Adaptionseinrichtung AD eine semi-permanente Verbindung zu dem Terminal T2 bis zu der Zugangseinrichtung ACC2 auf der Verbindung VAC2 weiterführt. Es ist jedoch auch möglich, dass von dem Terminal T1 eine semi-permanente Verbindung zu der Zugangseinrichtung ACC1 und eine weitere semi-permanente Verbindung zu der Zugangseinrichtung ACC2 eingerichtet ist. Die Adaptionseinrichtung AD kann auch die in den jeweiligen, von dem Terminal T1 gesendeten Datenpaketen enthaltenen IP-Adressen analysieren und davon abhängig die jeweiligen Datenpakete zu der Zugangseinrichtung ACC1 oder zu der Zugangseinrichtung ACC2 weiterleiten.

Zur Ermittlung der Gebühren des Terminals T1 für die Nutzung des ISDN-Telekommunikationsnetzes ISDNW als Zugangsmedium zum Internet ermittelt die Vermittlungsstelle SW1 einerseits das Volumen der auf der D-Kanal-Verbindung T1-D-ACC1 übertragenen Datenpakete, andererseits die Belegungsdauer der B-Kanal-Verbindung T1-B-ACC1 und bildet daraus eine gemeinsame Gebühreninformation. Die so ermittelte Gebühreninformation sendet die Vermittlungsstelle SW1 an eine in der Figur nicht dargestellte Gebührenerfassungseinrichtung in Form sogenannter "Billing Tickets". Diese kann die Gebühreninformation ohne komplizierte Nachbearbeitung für das Terminal T1 buchen. Es wäre zwar auch möglich, dass die Vermittlungsstelle SW1 die auf der B-Kanal-Verbindung T1-B-ACC1 transportierte Datenmenge ermittelte. Da jedoch auf einem B-Kanal eine konstante Bandbreite (64kBit/s) zur Verfügung steht, kann die in der Vermittlungsstelle SW1 ohnehin vorhandene Zeiterfassung für eine Belegung eines B-Kanals zur Gebührenerfassung eingesetzt werden. Die Vermittlungsstelle SW1 muss jedoch unterscheiden, ob der B-Kanal für eine geschaltete Gesprächsverbindung genutzt wird, oder, wie oben dargestellt, zur kurzzeitigen Übertragung von Daten.

Es kann auch in der Adaptionseinrichtung AD eine Erfassung des auf der D-Kanal-Verbindung T1-D-ACC1 sowie der B-Kanal-Verbindung T1-B-ACC1 übertragenen Datenvolumens erfolgen.

In einer in der Figur nicht dargestellten Variante kann die Verbindung TDSW auch über weitere, in der Figur nicht dargestellte Einrichtungen des ISDN-Telekommunikationsnetzes ISDNW führen, beispielsweise über weitere Vermittlungsstellen oder über ein Datennetzwerk, auf dem virtuelle Verbindungen eingerichtet werden können. Eine erste Zugangseinrichtung des ISDN-Telekommunikationsnetzes ISDNW zu dem Datennetzwerk, das z.B. ein Frame-Relay-Netzwerk ist, verpackt dann jeweils eines oder mehrere Datenpakete der Verbindung TDSW in Datencontainer oder Frames, während eine zweite Zugangseinrichtung die Datenpakete wieder aus den Datencontainer auspackt. Die umgekehrte Richtung funktioniert analog.

Die Adaptionseinrichtung AD kann, wie in der Figur gezeigt, als eine eigenständige Einrichtung, beispielsweise als ein Server, einer oder mehreren Internet-Zugangseinrichtungen vorgeschaltet sein und diese ohne eine weitere Aufrüstung zum Datenverkehr mit dem ISDN-Telekommunikationsnetz ISDNW ertüchtigen. Es ist jedoch auch möglich, dass die Adaptionseinrichtung AD in eine der Zugangseinrichtungen ACC1 oder ACC2 integriert ist oder dass den Zugangseinrichtungen ACC1 und ACC2 jeweils eine eigene Adaptionseinrichtung vorgeschaltet ist. Weiterhin kann die Adaptionseinrichtung AD in die Vermittlungsstelle TRANS integriert sein.

Die Vermittlungsstelle SW1 ist in der Figur stark schematisiert und es sind lediglich einige wenige Baugruppen gezeigt, die für die Darstellung der Erfindung wesentlich sind. Die Vermittlungsstelle SW1 kann jedoch darüber hinaus weitere Baugruppen aufweisen, beispielsweise weitere Teilnehmeranschlussbaugruppen, eine zentrale oder dezentrale Steuerung sowie Anschlüsse zu Einrichtungen eines Intelligenten Netzwerkes. Weiterhin ist die interne Anordnung der Verbindungsbaugruppe TR1SW, der Kombinationsbaugruppe MUX, der Verbindungsbaugruppe KOP und deren jeweilige interne Verbindungsleitungen lediglich beispielhaft und stark vereinfachend gewählt. Ein anderer, in seiner Funktion ähnlicher Aufbau der Vermittlungsstelle SW1 ist ohne weiteres möglich.

Eine weitere Variante der Erfindung wird im Folgenden anhand der Vermittlungsstelle SW2 dargestellt. Dabei sind die Terminals T3 und T4 ähnlich wie die Terminals T1 und T2 jeweils über eine semi-permanenten D-Kanal-Verbindung T3-D-ACC1 bzw. T4-D-ACC1 mit dem Internet verbunden. Die D-Kanal-Verbindung T3-D-ACC1 des Terminals T3 führt über die ISDN-Teilnehmeranschlussleitung BDT3, die Vermittlungsstelle SW2, die Verbindung TSW2, die Vermittlungsstelle TRANS, die Verbindung TDAD, die Adaptionseinrichtung AD zu der Zugangseinrichtung ACC1. Die D-Kanal-Verbindung T4-D-ACC1 des Terminals T4 führt anstatt über die ISDN-Teilnehmeranschlussleitung BDT3 über die ISDN-Teilnehmeranschlussleitung BDT4. Dabei ist es möglich, dass die D-Kanal-Verbindungen T1-D-ACC1 und T2-D-ACC1 einerseits und die D-Kanal-Verbindungen T3-D-ACC1 und T4-D-ACC1 andererseits jeweils auf einem gemeinsamen Kanal der Verbindung TDAD geführt werden. Es ist jedoch auch möglich, dass die Vermittlungsstelle TRANS die D-Kanal-Verbindungen T1-D-ACC1, T2-D-ACC1, T3-D-ACC1 und T4-D-ACC1 auf einem gemeinsamen Bd-Kanal in Richtung Adaptionseinrichtung AD bündelt sowie aus Richtung Adaptionseinrichtung AD entbündelt. Diese Variante ermöglicht eine optimale Auslastung der Verbindung TDAD.

## Patentansprüche

1. Verfahren zur Anbindung eines Telekommunikations-Terminals (T1) an das Internet über ein ISDN (Integrated Services Digital Network)-Telekommunikationsnetz (ISDNW), wobei das Terminal (T1) eine Schnittstelleneinrichtung aufweist, mit der das Terminal Daten in einem ersten Protokoll eines Paketdatennetzwerkes empfangen und senden kann, wobei das Terminal an eine Vermittlungsstelle (SW1) des ISDN-Telekommunikationsnetzes angeschlossen ist, wobei die Daten des Terminals mit Daten kombiniert werden, die von weiteren Terminals (T2) gesendet oder empfangen werden, **dadurch gekennzeichnet, dass** die kombinierten Daten über eine Datenverbindung (TDSW) des ISDN-Telekommunikationsnetzes zwischen der Vermittlungsstelle (SW1) und einer Adaptionseinrichtung (AD) übertragen werden, dass die Daten in ein von mindestens einer ersten Internet-Zugangseinrichtung (ACC1, ACC2) interpretierbares zweites Protokoll von der Adaptionseinrichtung (AD) konvertiert werden und umgekehrt, und dass die Daten in dem zweiten Protokoll zwischen der mindestens einen Internet-Zugangseinrichtung (ACC1, ACC2) und der Adaptionseinrichtung (AD) übertragen werden.

2. Verfahren nach Anspruch 1, **dadurch gekennzeichnet, dass** die Daten zwischen dem Terminal (T1) und dem ISDN-Telekommunikationsnetz über einen D-Kanal (DT1) übertragen werden und dass als Datenverbindung (TDSW) des ISDN-Telekommunikationsnetzes, auf der die Daten des Terminals zusammen mit den Daten der weiteren Terminals übertragen werden, ein Bd-Kanal eingesetzt wird, der die Kapazität eines B-Kanals aufweist und auf dem Daten mehrerer D-Kanäle zusammen Überträgen werden können.

3. Verfahren nach Anspruch 1, **dadurch gekennzeichnet, dass** zumindest ein B-Kanal (BT1, TBSW, TBAD) eingesetzt wird, wenn die Daten, die von oder zu dem Terminal (T1) zu übertragen sind, die Übertragungskapazität eines D-Kanals überschreiten.

4. Verfahren nach Anspruch 3, **dadurch gekennzeichnet, dass** der zumindest eine B-Kanal (BT1, TBSW, TBAD) und der zumindest eine D-Kanal (DT1) zu der Adaptionseinrichtung (AD) geführt wird und dass die Adaptionseinrichtung (AD) zur Bildung einer homogenen Schnittstelle für die erste Internet-Zugangseinrichtung (ACC1, ACC2) sowohl die auf dem zumindest einen B-Kanal (BT1, TBSW, TBAD) als auch die auf dem zumindest einen D-Kanal (DT1) übertragenen Daten in das von der ersten Internet-Zugangseinrichtung (ACC1, ACC2) interpretierbare zweite Protokoll konvertiert und umgekehrt.

5. Verfahren nach Anspruch 1, **dadurch gekennzeichnet, dass** die Adaptionseinrichtung (AD) die Daten abhängig von einer jeweils in den Daten angegebenen Zielinformation an die mindestens eine Zugangseinrichtung oder an eine alternative Zugangseinrichtung sendet.

6. Verfahren nach Anspruch 1, **dadurch gekennzeichnet, dass dadurch gekennzeichnet, dass** als erstes Protokoll das X.25-Protokoll eingesetzt wird.

7. Verfahren nach Anspruch 1, **dadurch gekennzeichnet, dass** als erstes Protokoll ein Point-to-Point-Protokoll eingesetzt wird.

8. Verfahren nach Anspruch 3, **dadurch gekennzeichnet, dass** die Vermittlungsstelle (SW1) erste Gebühren aus derjenigen Datenmenge ermittelt, die über den D-Kanal (DT1) übertragen wird und dass die Vermittlungsstelle mindestens zweite Gebühren aus der Belegungsdauer des mindestens einen B-Kanals (BT1) ermittelt.

9. Adaptionseinrichtung (AD) zur Anbindung von Telekommunikations-Terminals (T1, T2) an das Internet über ein ISDN (Integrated Services Digital Network)-Telekommunikationsnetz, **dadurch gekennzeichnet, dass** die Adaptionseinrichtung (AD) erste Übertragungsmittel (ADTR1) aufweist, die derart ausgestaltet sind, dass die Adaptionseinrichtung von Terminals gesendete Daten in einem ersten Protokoll eines Paketdatennetzwerkes über eine Datenverbindung (TDAD) des ISDN-Telekommunikationsnetzes senden und empfangen kann, dass die Adaptionseinrichtung Konvertierungsmittel (KONV) aufweist, die derart ausgestaltet sind, dass die Adaptionseinrichtung die Daten in ein von mindestens einer ersten Internet-Zugangseinrichtung (ACC1, ACC2) interpretierbares zweites Protokoll konvertieren kann und umgekehrt, und dass die Adaptionseinrichtung zweite Übertragungsmittel (ADTR2) aufweist, die derart ausgestaltet sind, dass die Adaptionseinrichtung Daten in dem zweiten Protokoll an die mindestens eine Internet-Zugangseinrichtung (ACC1, ACC2) senden und von dieser empfangen kann.

10. Adaptionseinrichtung (AD) nach Anspruch 8, **dadurch gekennzeichnet, dass** die ersten Übertragungsmittel (ADTR1) weiterhin derart ausgestaltet sind, dass an die Adaptionseinrichtung als Datenverbindung des ISDN-Telekommunikationsnetzes zumindest ein Bd-Kanal (TBAD) angeschlossen werden kann, der die Kapazität eines B-Kanals aufweist und auf dem Daten mehrerer D-Kanäle zusammen übertragen werden können, und dass die Adaptionseinrichtung auf dem Bd-Kanal Daten senden und empfangen kann.

11. Adaptionseinrichtung (AD) nach Anspruch 8, **dadurch gekennzeichnet, dass** die ersten Übertragungsmittel (ADTR1) weiterhin derart ausgestaltet sind, dass die Adaptionseinrichtung eine Datenverbindung (TDAD, TDSW) über das ISDN-Telekommunikationsnetz zu einer Vermittlungsstelle (SW1) des ISDN-Telekommunikationsnetzes (ISDNW) aufbauen kann, wenn es zur Übertragung von Daten erforderlich ist, die von der ersten Internet-Zugangseinrichtung (ACC1, ACC2) an ein an die Vermittlungsstelle angeschlossenes Terminal (T1, T2) gesendet werden.

12. Adaptionseinrichtung (AD) nach Anspruch 8, **dadurch gekennzeichnet, dass** die ersten Übertragungsmittel (ADTR1) weiterhin derart ausgestaltet sind, dass die Adaptionseinrichtung (AD) auf zumindest einem B-Kanal Daten übertragen kann, wenn von oder zu einem Terminal (T1, T2) zu übertragende Daten die Übertragungskapazität eines zu dem jeweiligen Terminal führenden D-Kanals (DT1, DT2) überschreiten.

13. Netzwerkknoten mit einer Adaptionseinrichtung (AD) zur Anbindung von Telekommunikations-Terminals (T1, T2) an das Internet über ein ISDN (Integrated Services Digital Network) -Telekommunikationsnetz, **dadurch gekennzeichnet, dass** die Adaptionseinrichtung (AD) erste Übertragungsmittel (ADTR1) aufweist, die derart ausgestaltet sind, dass die Adaptionseinrichtung von Terminals gesendete Daten in einem ersten Protokoll eines Paketdatennetzwerkes über eine Datenverbindung (TDAD) des ISDN-Telekommunikationsnetzes senden und empfangen kann, dass die Adaptionseinrichtung Konvertierungsmittel (KONV) aufweist, die derart ausgestaltet sind, dass die Adaptionseinrichtung die Daten in ein von mindestens einer ersten Internet-Zugangseinrichtung (ACC1, ACC2) interpretierbares zweites Protokoll konvertieren kann und umgekehrt, und dass die Adaptionseinrichtung zweite Übertragungsmittel (ADTR2) aufweist, die derart ausgestaltet sind, dass die Adaptionseinrichtung Daten in dem zweiten Protokoll an die mindestens eine Internet-Zugangseinrichtung (ACC1, ACC2) senden und von dieser empfangen kann.

14. Vermittlungsstelle (SW1) zur Anbindung eines Telekommunikations-Terminals (T1, T2) an das Internet über ein ISDN (Integrated Services Digital Network)-Telekommunikationsnetz, wobei die Vermittlungsstelle Anschlussmittel (TR1 SW) aufweist, die derart ausgestaltet sind, dass zumindest ein Terminal (T1) an die Vermittlungsstelle angeschlossen werden kann, wobei die Vermittlungsstelle erste Verbindungsmittel (TR1SW) aufweist, die derart ausgestaltet sind, dass die Vermittlungsstelle Daten in einem ersten Protokoll eines Paketdatennetzwerkes an das Terminal (T1) senden und von dem Terminal empfangen kann, und wobei die Vermittlungsstelle Kombinationsmittel (MUX) aufweist, die derart ausgestaltet sind, dass die Vermittlungsstelle Daten des Terminals mit Daten kombinieren kann, die von weiteren Terminals (T2) gesendet oder empfangen werden, **dadurch gekennzeichnet, dass** die Vermittlungsstelle zweite Verbindungsmittel (MUX, KOP) aufweist, die derart ausgestaltet sind, dass die Vermittlungsstelle anhand von in den Daten der Terminals enthaltenen Zieladressinformationen eine Datenverbindung (TDSW, TDAD) über das ISDNTelekommunikationsnetz (ISDNW) zu einer Adaptionseinrichtung (AD) aufbauen oder eine bereits aufgebaute Datenverbindung (TDSW, TDAD) über das ISDN-Telekommunikationsnetz (ISDNW) zu der Adaptionseinrichtung (AD) zur Übermittlung der Daten ermitteln kann, wobei die Adaptionseinrichtung (AD) die kombinierten Daten in ein von mindestens einer Internet-Zugangseinrichtung (ACC1, ACC2) interpretierbares zweites Protokoll und umgekehrt konvertieren kann und wobei die Adaptionseinrichtung (AD) die konvertierten Daten mit der Internet-Zugangseinrichtung (ACC1, ACC2) austauschen kann, und dass die zweiten Verbindungsmittel (MUX, KOP) weiterhin derart ausgestaltet sind, dass die Vermittlungsstelle auf der Datenverbindung (TDSW, TDAD) über das ISDN-Telekommunikationsnetz (ISDNW) die aus Daten der Terminals (T1, T2) kombinierten Daten senden und empfangen kann.
